# EUROPÄISCHE PATENTSCHRIFT

(11) **EP 1 025 027 B1**
(45) Veröffentlichungstag und Bekanntmachung des Hinweises auf die Patenterteilung: **15.05.2002**
(21) Anmeldenummer: 98966233.3
(22) Anmeldetag: 21.10.1998
(51) Int. Cl.: B65G 1/137, G06F 17/60

(54) **VERFAHREN UND SYSTEM ZUM VERIFIZIEREN DER ZUTREFFENDEN AUSLIEFERUNG VON MOBILEN LIEFEREINHEITEN AN AUFBEWAHRUNGSEINHEITEN**
METHOD AND SYSTEM FOR VERIFYING CORRECT DELIVERIES BY MOBILE DELIVERY UNITS IN STORAGE UNITS
PROCEDE ET SYSTEME POUR VERIFIER LA LIVRAISON CORRECTE D'ARTICLES A LIVRER MOBILES A DES UNITES DE STOCKAGE

(30) Priorität: 29.10.1997 DE 19747766
(43) Veröffentlichungstag der Anmeldung: 09.08.2000
(73) Patentinhaber: Becker, Markus, D-34317 Habichtswald (DE)
(72) Erfinder: Becker, Markus, D-34317 Habichtswald (DE)
(74) Vertreter: Fritsche, Rainer, Dipl.-Wirtsch.-Ing.
(86) Internationale Anmeldenummer: EP9806671
(87) Internationale Veröffentlichungsnummer: WO9924924

(56) Entgegenhaltungen:
- EP-A- 0 565 290
- EP-A- 0 821 518
- FR-A- 2 565 370
- FR-A- 2 731 816
- US-A- 5 322 991
- PATENT ABSTRACTS OF JAPAN vol. 098, no. 010, 31. August 1998 & JP 10 117917 A (OURA KAZUNARI), 12. Mai 1998

## Beschreibung

Die Erfindung betrifft ein Verfahren sowie ein System zum Verifizieren der richtigen Auslieferung von Liefereinheiten an insbesondere stationäre Aufbewahrungseinheiten, wie sie in den Ansprüchen 1 und 5 wiedergegeben sind.

In verschiedenen Wirtschaftsbereichen, bei denen Erzeugnisse von einem Hersteller oder einem Warenlager durch einen Lieferanten an einen Kunden ausgeliefert werden müssen, stellen sich für den Lieferanten, insbesondere bei Abwesenheit des Empfängers zum Lieferzeitpunkt, immer wieder die gleichen Probleme, nämlich einerseits die Zuordnung des richtigen Produkts an den zutreffenden Empfänger zu gewährleisten und andererseits unzweifelhaft nachweisen zu können, daß die Anlieferung durchgeführt worden ist. Gerade wenn der Empfänger nicht anwesend ist, kann es zum einen zu Fehlern bei der Zustellung kommen, da entweder das abzuliefernde Produkt nicht dem richtigen Empfänger zugeordnet wird oder aber einem Empfänger ein unzutreffendes Produkt geliefert wird. Zum anderen besteht aber auch auf Seiten des Abliefernden die Gefahr, Manipulationen in der Form vorzunehmen, daß die Ablieferung trotz gegenteiliger Behauptung nicht erfolgt ist.

Es ist Aufgabe der vorliegenden Erfindung, ein Verfahren sowie ein System der eingangs genannten Art zu schaffen, die eine nachweisbare und verwechslungsfreie Zustellung von zu liefernden Gegenständen ermöglichen.

Hinsichtlich des Verfahrens wird die vorstehende Aufgabe durch die Merkmale des Anspruchs 1 gelöst. Vorteilhafte Ausgestaltungen des Verfahrens finden sich in den Unteransprüchen 2 bis 4.

Bevor das eigentliche erfindungsgemäße Verfahren dargestellt wird, sollen zunächst die einzelnen Bestandteile des erfindungsgemäßen Systems erläutert werden, das selbst Gegenstand des Anspruchs 5 ist.

Bei den im Rahmen des erfindungsgemäßen Verfahrens verwendeten Aufbewahrungseinheiten handelt es sich um insbesondere stationäre Behälter, die entweder einzeln von dem Empfänger an seinem Aufenthaltsort an einer von außen zugänglichen Stelle oder in Gruppen zusammengefaßt an einem für mehrere Empfänger zentral zugänglichen Ort, der ebenfalls von dem Lieferanten ohne weiteres angefahren werden kann, aufgestellt werden. Die die Aufbewahrungseinheiten jeweils bildenden Behälter sind allseitig umschlossen und besitzen wenigstens eine Zugangstür mit einer Verriegelungseinrichtung. Die Verriegelungseinrichtung kann in der Weise ausgestaltet sein, daß sie beispielsweise von jeder beliebigen Person verriegelt, jedoch nur von dem oder den Besitzern eines nur zu dieser Aufbewahrungseinheit gehörenden Schlüssels und dgl. (z.B. auch eine Magnetkarte) geöffnet werden kann. Die Größe der Aufbewahrungseinheit kann frei gewählt werden, jedoch ist sie mindestens so groß, daß sie wenigstens eine Liefereinheit im Inneren aufnehmen kann. An der Außenseite ist die Aufbewahrungseinheit mit einer ersten Identifikationskennung versehen, die aus einem nicht maschinenlesbaren oder einem maschinenlesbaren Code, zum Beispiel einem Barcode, bestehen kann. Zu bemerken ist noch, daß die Aufbewahrungseinheit sowohl stationär als auch mobil ausgestaltet sein kann. Letzteres in dem Sinn, daß die Aufbewahrungseinheit im Falle einer Umorganisation, eines Umzuges usw. verlegt werden kann.

Die im Rahmen des erfindungsgemäßen Verfahrens verwendete Liefereinheit kann sowohl der zu liefernde Gegenstand selbst als auch ein Behälter sein, der den oder die zu liefernden Gegenstände, insbesondere Artikel des Einzelhandels, in seinem Inneren aufnimmt. Hierbei kann der Behälter sowohl starre als auch faltbare Wände aufweisen. Weiterhin kann die Liefereinheit mit einem Verschlußteil versehen sein, das, ähnlich wie die Verriegelungseinrichtung der Aufbewahrungseinheit, von jedermann verschlossen, jedoch nur von dem Inhaber eines zu der jeweiligen Liefereinheit eindeutig gehörenden Schlüssels und dgl. geöffnet werden kann.

Das ebenfalls in dem erfindungsgemäßen Verfahren verwendete mobile, die Liefereinheiten bis zu der Ablieferung in den Aufbewahrungseinheiten begleitende Lese- und Auswertegerät kann beispielsweise eine Tastatur zur manuellen Eingabe und/oder ein Handscanner sein, der in der Lage ist, Daten zu speichern, diese Daten in einer vorgegebenen Form auszuwerten und ggf. diese Daten an einen Zentralrechner zum Beispiel per drahtloser Fernübertragung zu übertragen. Mit einem Gerät können während einer Liefertour mehrere Liefereinheiten aufeinanderfolgend ausgeliefert werden.

Die zutreffende Lieferung der richtigen Liefereinheit an die entsprechende Aufbewahrungseinheit wird durch das erfindungsgemäße Verfahren dadurch sichergestellt, daß zunächst eine auftragsbezogene Kennung zumindest für die Anlieferung der Liefereinheit an eine Aufbewahrungseinheit vergeben wird. Diese auftragsbezogene Kennung kann nicht nur für die Anlieferung sondern auch für die gesamte Abwicklung des mit der Anlieferung der Liefereinheit verbundenen Auftrages Verwendung finden. Die auftragsbezogene Kennung wird zusammen mit der ersten Identifikationskennung der zu beliefernden Aufbewahrungseinheit in das mobile Lese- und Auswertegerät vor dem eigentlichen Ausliefervorgang beispielsweise durch einen Zentralrechner eingegeben, der in Kommunikationsverbindung mit dem mobilen Lese- und Auswertegerät steht. Selbstverständlich kann auch eine Eingabe von Hand einer oder beider Kennungen erfolgen. Beim Eintreffen an der Aufbewahrungseinheit wird in das mobile Lese- und Auswertegerät die an der betreffenden Aufbewahrungseinheit vorhandene erste Identifikationskennung eingegeben, wozu das mobile Lese- und Auswertegerät eine entsprechende Tastatur für eine manuelle Eingabe aufweisen kann. Sofern die erste Identifikationskennung in Form eines kodierten, maschinenlesbaren Codes, beispielsweise in Form eines Barcode, vorliegen sollte, kann auch die Eingabe der ersten Identifikationskennung durch einen einfachen Lesevorgang mittels des Lese- und Auswertegeräts erfolgen. Anschließend, oder umgekehrt, wird die an der Liefereinheit ebenfalls vorhandene Auftragsnummer eingegeben. Auch hier gilt, daß die auftragsbezogene Kennung entweder von Hand über eine entsprechende Tastatur des mobilen Leseund Auswertegerätes eingegeben oder, sofern diese Kennung als codierter, maschinenlesbarer Code vorliegt, durch einen automatischen Lesevorgang seitens des Lese- und Auswertegerätes eingegeben werden kann.

Diese soeben eingegebene bzw. gelesene Kombination aus erster Identifikationskennung und auftragsbezogener Kennung wird in dem Lese- und Auswertegerät mit der bereits vorab dem Lese- und Auswertegerät übermittelten Kombination aus auftragsbezogener Kennung und erster Identifikationskennung verglichen. Stimmen die Kombinationen überein, so wird dies angezeigt und damit festgestellt, daß die richtige Liefereinheit an der zutreffenden Aufbewahrungseinheit angeliefert worden ist. Ggf. kann das so ermittelte Ergebnis in dem mobilen Lese- und Auswertegerät abgespeichert und/oder dem Zentralrechner übermittelt werden, damit dieser die richtige Anlieferung an der zutreffenden Aufbewahrungseinheit protokolliert.

Wenn zwar die eingegebene, erste Identifikationskennung mit der in dem mobilen Lese- und Auswertegerät abgespeicherten ersten Identifikationskennung übereinstimmt, aber die eingegebene auftragsbezogene Kennung nicht mit der abgespeicherten auftragsbezogenen Kennung identisch ist, so zeigt dieses Ergebnis, daß zwar die richtige zu beliefernde Aufbewahrungseinheit angelaufen worden ist, jedoch die falsche Liefereinheit für diese Aufbewahrungseinheit vorgesehen ist. Wenn demgegenüber zwar die eingegebene auftragsbezogene Kennung mit der abgespeicherten auftragsbezogenen Kennung übereinstimmt, jedoch die abgespeicherte erste Identifikationskennung nicht mit der eingegebenen ersten Identifikationskennung identisch ist, so zeigt dies an, daß eine abzuliefernde Liefereinheit erfaßt worden ist, jedoch diese an der falschen Aufbewahrungseinheit angeliefert worden ist.

Die nachprüfbare Ablieferung der Liefereinheit in der zutreffenden Aufbewahrungseinheit wird bei dem erfindungsgemäßen Verfahren dadurch sichergestellt, daß nach dem Einstellen der Liefereinheit in die Aufbewahrungseinheit beispielsweise über ein Fenster in der Aufbewahrungseinheit die an der Liefereinheit angebrachte auftragsbezogene Kennung von außen zugänglich wird. Darüber hinaus wird nach dem Verriegeln über beispielsweise ebenfalls ein Fenster in der Aufbewahrungseinheit eine vorzugsweise in maschinenlesbarer Form codierte zweite Identifikationskennung der Aufbewahrungseinheit von außen zugänglich erscheinen. Sowohl die an der Liefereinheit befindliche auftragsbezogene Kennung, als auch die codierte zweite Identifikationskennung werden in das mobile Lese- und Auswertegerät zumindest in einer vorbestimmten, kurzen Zeitspanne unmittelbar hintereinander in dieses eingegeben bzw. durch dieses eingelesen, und damit festgestellt, daß sich tatsächlich die richtige Liefereinheit in der zutreffenden Aufbewahrungseinheit befindet. Eine Manipulation in der Form, daß bei der Auslieferung zwar die Aufbewahrungseinheit verriegelt, aber die Liefereinheit in die Aufbewahrungseinheit nicht eingestellt worden ist, wird hierdurch ausgeschlossen. Auch auf Seiten des Empfängers wird eine Behauptung, daß in der Aufbewahrungseinheit keine Liefereinheit vorhanden war, ausgeschlossen.

Es ist in diesem Zusammenhang zu bemerken, daß die auftragsbezogene Kennung und die erste Identifikationskennung ebenfalls als maschinenlesbare Codes, beispielsweise als Barcode vorliegen. Hierdurch werden Fehler beim Eingeben verhindert und der Ablieferungsvorgang insgesamt beschleunigt.

Weiterhin ist hierbei zu bemerken, daß bevorzugt wird, daß die codierte zweite Identifikationskennung und die codierte auftragsbezogene Kennung zeitgleich durch das mobile Lese- und Auswertegerät gelesen werden. Es ist aber auch möglich, hierfür eine kurze Zeitspanne vorzusehen, deren Länge so bemessen sein muß, daß ausgeschlossen werden kann, daß das Lesen bzw. Eingeben der auftragsbezogenen Kennung bei einer noch außerhalb der Aufbewahrungseinheit befindlichen Liefereinheit und der codierten zweiten Identifikationskennung hintereinander nicht möglich ist. Mit anderen Worten soll hierdurch die Manipulation verhindert werden, daß eine Liefereinheit nicht in die Aufbewahrungseinheit eingestellt wird, die Aufbewahrungseinheit aber verriegelt und anschließend die Behauptung aufgestellt wird, daß die Ablieferung erfolgt sei. Durch das vorgeschlagene Verfahren wird ein derartiger Sachverhalt ausgeschlossen.

In diesem Zusammenhang ist zu bemerken, daß die Aufbewahrungseinheit ein erstes Fenster, durch das bei eingestellter Liefereinheit die vorzugsweise codierte maschinenlesbare auftragsbezogene Kennung von außen lesbar ist, und ein zweites Fenster aufweisen kann, in dem nach dem Verriegeln der Verriegelungseinrichtung die zweite Identifikationskennung von außen lesbar ist. Alternativ kann hierzu vorgesehen sein, daß die Aufbewahrungseinheit ein Fenster mit einem ersten Feld und einem zweiten Feld aufweist, wobei in dem ersten Feld bei eingestellter Liefereinheit die vorzugsweise maschinenlesbare codierte auftragsbezogene Kennung von außen lesbar ist und wobei in dem zweiten Feld nach dem Verriegeln der Verriegelungseinrichtung die codierte zweite Identifikationskennung in der Weise von außen sichtbar ist, daß sie die maschinenlesbare codierte auftragsbezogene Kennung zur Hälfte überdeckt. Die zweite Alternative stellt eine weitere Sicherheit gegen denkbare Manipulationsmöglichkeiten dar, da hierdurch zwingend vorgesehen ist, daß sich die Liefereinheit tatsächlich im Inneren der Aufbewahrungseinheit befindet. Diese zweite Alternative ist insbesondere dann vorteilhaft, wenn die Codierungen der auftragsbezogenen Kennung und der Identifikationskennungen in Form von Barcodes erfolgt.

Um die Lieferung von mehreren Liefereinheiten an eine große Anzahl unterschiedlicher Aufbewahrungseinheiten zeitgleich ermöglichen zu können, hat es sich als vorteilhaft erwiesen, wenn ein vorzugsweise ortsfester Rechner vorgesehen wird, der die auftragsbezogene Kennung erstellt und der in Kommunikationsverbindung mit den die Liefereinheiten begleitenden, mobilen Lese- und Auswertegeräten steht. Neben der Kommunikation zu dem oder den mobilen Lese- und Auswertegeräten und der Vergabe der auftragsbezogenen Kennung kann dieser Rechner auch die Auftragsabwicklung sowie die Kommissionierung der Waren durchführen. Desweiteren kann dieser Rechner auch zur Verwaltung des die Waren aufnehmenden Lagers herangezogen werden.

Die Kommunikation zwischen dem Rechner und dem oder den mobilen Lese- und Auswertegeräten kann sowohl über eine Drahtverbindung als auch drahtlos beispielsweise per Funk erfolgen.

Wie bereits vorstehend darauf hingewiesen worden ist, kann nach dem Lesen der codierten zweiten Identifikationskennung und der vorzugweise maschinenlesbaren codierten auftragsbezogenen Kennung durch das mobile Lese- und Auswertegerät das Ergebnis des Lesevorgangs an den Rechner übermittelt werden, damit dort das Ergebnis protokolliert wird.

Es hat sich als vorteilhaft erwiesen, wenn das Ergebnis des durch das mobile Leseund Auswertegerät durchgeführten Vergleiches zwischen der durch das mobile Lese- und Auswertegerät gelesenen Kombination aus vorzugsweise maschinenlesbarer codierter erster Identifikationskennung und vorzugsweise maschinenlesbarer codierter auftragsbezogener Kennung sowie der im mobilen Lese- und Auswertegerät bereits vorher abgespeicherten Kombination aus erster Identifikationskennung und auftragsbezogener Kennung an den Rechner übermittelt wird.

Wird ein negatives Ergebnis des durch das mobile Lese- und Auswertegerät durchgeführten Vergleiches zwischen der durch das mobile Lese- und Auswertegerät gelesenen Kombination aus erster Identifikationskennung und auftragsbezogener Kennung sowie der im mobilen Lese- und Auswertegerät bereits vorab gespeicherten Kombination aus erster Identifikationskennung und auftragsbezogener Kennung visuell und/oder akustisch angezeigt, so wird hierdurch sicher erreicht, daß auch die Lieferperson auf den Fehler sofort aufmerksam gemacht wird, und damit die Möglichkeit erhält, diesen Fehler richtigzustellen.

Grundsätzlich kann für die erste Identifikationskennung und die zweite Identifikationskennung jede beliebige Verschlüsselung gewählt werden. Eine einfache Verwaltung dieser Identifikationskennungen wird dadurch erreicht, daß die zweite Identifikationskennung einer Aufbewahrungseinheit durch eine zu der ersten Identifikationskennung komplementäre Kennung bzw. Verschlüsselung dieser Einheit gebildet wird. In diesem Zusammenhang ist zu bemerken, daß es sich als vorteilhaft erwiesen hat, wenn die codierte erste Identifikationskennung von der codierten zweiten Identifikationskennung verschieden ist.

Es hat sich als vorteilhaft erwiesen, wenn die zweite Identifikationskennung und die auftragsbezogene Kennung gleichzeitig durch das mobile Lese- und Auswertegerät erfaßt werden.

Damit nach Eingang eines Auftrages eine für einen Kunden vorgesehene Liefereinheit tatsächlich an die zugehörige Aufbewahrungseinheit geliefert werden kann, wird bei Eingang des Auftrages von dem Rechner die von ihm vergebene auftragsbezogene Kennung mit einer durch den Auftraggeber vorgegebenen Zustelladresse kombiniert. Diese Zustelladresse wiederum identifiziert die zugehörige Aufbewahrungseinheit, die durch ihre erste Identifikationskennung charakterisiert ist.

Damit ein Kunde prüfen kann, ob sein die Lieferung einer Liefereinheit auslösender Auftrag mit seiner Bestellung übereinstimmt, kann weiterhin vorgesehen sein, daß die auftragsbezogene Kennung zusammen mit den Einzelheiten des Auftrages zur Bestätigung vorzugsweise per Faxübertragung durch den Rechner an den Kunden übermittelt wird. Sofern der Kunde dann eine Bestätigung, ggf. ebenfalls per Fax schickt, wird der Auftrag ausgeführt. In diesem Zusammenhang kann vorgesehen sein, daß der Auftrag auch dann ausgeführt wird, wenn ein Zahlungseingang durch den Rechner verzeichnet wird, beispielsweise in der Form, daß der Kunde bei Auftragsbestätigung seine Kreditkartennummer mit angibt, so daß eine Abbuchung möglich wird.

Das erfindungsgemäße Verfahren läßt sich insbesondere im Zusammenhang mit der Kommissionierung und Auslieferung von Artikeln des Einzelhandels vorteilhaft einsetzen. In einem solchen Fall kann der Rechner nach Eingang der Auftragsbestätigung durch den Kunden einen Auftrags- oder Packzettel, der die vorzugsweise codierte, maschinenlesbare auftragsbezogene Kennung, die die einzelnen Artikel identifizierenden, vorzugsweise maschinenlesbaren Codes und die Artikelbezeichnungen sowie Mengen in Klarschrift aufweist, erstellen und diesen an eine Druckeinheit zum Ausdrucken und/oder an einen Kommissionierroboter und/oder an eine Person für die Kommisionierung übermitteln.

Weiterhin kann vorgesehen sein, daß die einzelnen Artikel jeweils mit dem sie identifizierenden, vorzugsweise maschinenlesbaren Code versehen sind und bei der Entnahme eines Artikels aus einer Bevorratungseinrichtung anhand des Auftragszettels eine Übereinstimmungsprüfung zwischen der auf dem Auftragszettel und auf dem Artikel codiert vorhandenen Artikelnummer in der Weise ausgeführt wird, daß beide Codes durch ein Lesegerät gelesen und verglichen werden, wobei die richtige Zuordnung abgespeichert und ggf. bei Erreichen des Endes des Auftragszettels dem Rechner mitgeteilt wird (1. Kontrolle).

In diesem Zusammenhang ist zu bemerken, daß das erfindungsgemäße Verfahren insbesondere bei automatischen Regallagern vorteilhaft ist, bei denen die Entnahme einzelner Artikel aus den Regalen durch einen Kommissionierroboter ausgeführt wird. In einem solchen Fall wird durch den Rechner kein Auftragszettel im eigentlichen Sinne erstellt, sondern im virtuellen Sinne und dem Entnahmeroboter drahtlos oder über Draht übermittelt.

Nach Erreichen des Endes des Auftragszettels wird eine Kontrolle in der Weise ausgeführt, daß nach dem Aufruf der auftragsbezogenen Kennung alle Artikel durch eine stationäre Lese- und Auswerteeinheit geführt werden, welche die auf jedem Artikel vorhandene Artikelnummer liest, das Gewicht des Artikels sowie dessen Stückzahl erfaßt sowie die so ermittelten Informationen hinsichtlich Art, Stückzahl und Gewicht mit den von dem Rechner bereitgestellten Informationen zu diesem Auftrag vergleicht. Durch diese Kontrolle wird sichergestellt, daß der Auftrag auch entsprechend der Bestellung des Kunden erledigt wird (2. Kontrolle).

Bei einem positiven Ergebnis des Vergleiches zwischen den von dem stationären Lese- und Auswertegerät ermittelten und den von dem Rechner bereitgestellten Informationen sowie nach dem Einbringen der Artikel in eine Liefereinheit wird diese verschlossen. Dazu wird von der Peripherie des Rechners ein Datenträger mit einer Codierung, vorzugsweise eine unten noch näher beschriebene Magnetkarte, ausgegeben. Auf diesem Datenträger ist auch die auftragsbezogene Kennung in codierter, maschinenlesbarer Form vorhanden, z.B. in Form eines Aufdruckes. Dies kann beispielsweise mittels eines Barcodedruckers geschehen. Als vorteilhaft erweist sich, den Datenträger dabei so zu positionieren, daß er nach dem Einstellen der Liefereinheit in die Aufbewahrungseinheit von außen zugänglich gelesen werden kann.

Nach dem Verschließen der Liefereinheit wird das Gewicht der mit Artikeln gefüllten Liefereinheit erfaßt, in dem Rechner mit dem vorabbestimmten Gesamtgewicht aus dem Gewicht der Artikel und dem Leergewicht der Liefereinheit verglichen und bei Übereinstimmung ggf. in einem vorgegebenen Toleranzbereich die Kommissionierung beendet. Hierdurch wird in einer Endkontrolle gewährleistet, daß beim Packen der Liefereinheit nach der Endkontrolle keine Manipulationen mehr erfolgen können. Um sicherzustellen, daß nur die bereits gepackte, verschlossene Liefereinheit mit der Zustelladresse in Klarschrift verbunden wird, geschieht dies im Versandbereich durch Einlesen der codierten, maschinenlesbaren auftragsbezogenen Kennung, vorzugsweise räumlich getrennt vom Kommissionierbereich.

Grundsätzlich besteht die Möglichkeit, daß die Liefereinheit unverschlossen bleibt. Jedoch besteht bei dieser Möglichkeit die Gefahr, daß im Rahmen der Auslieferung Manipulationen an dem Inhalt der Liefereinheit vorgenommen werden können. Daher hat es sich als vorteilhaft erwiesen, wenn nach dem Bestücken der Liefereinheit diese verschlossen und mittels eines codierten Verschlußteils verriegelt wird. Der Code für das Verschlußteil der Liefereinheit kann dabei zumindest als Komplementärwert zu der dem Empfänger der Liefereinheit zugeordneten Kundennummer gebildet sein. Damit ist der Kunde in der Lage, durch Verwendung seiner Kundennummer die Liefereinheit zu öffnen. Andere Personen als der Kunde können demgegenüber die Liefereinheit nicht öffnen, da Ihnen die Kundennummer nicht zur Verfügung steht.

Damit eine Liefereinheit für verschiedene Aufträge, d.h. auch für verschiedene Kunden verwendbar ist, muß die Codierung von Kunde zu Kunde geändert werden. Um dies zu ermöglichen, wird der Code für das Verschlußteil der Liefereinheit mittels einer Magnetkarte temporär eingegeben. Anstelle einer Magnetkarte kann selbstverständlich jede andere Form eines überschreibbaren Speichers verwendet werden.

Die Magnetkarte wird vorzugsweise nach der vorstehend erwähnten Endkontrolle ausgegeben und in einen Schlitz an dem Verschlußteil der Liefereinheit eingeschoben. Auf dem Magnetstreifen der Magnetkarte kann sich dann der Verriegelungscode (und selbstverständlich der Öffnungscode) sowie ggf. die Kundennummer befinden.

Damit die Magnetkarte nicht zu Manipulationszwecken verwendet werden kann, ist weiterhin vorgesehen, daß die Magnetkarte nach dem Einführen in das Verschlußteil der Liefereinheit in diesem solange von außen unzugänglich zurückbleibt, bis die Liefereinheit durch autorisierte Personen, insbesondere den Kunden, geöffnet wird. Dann kann die Magnetkarte wieder entfernt und vernichtet werden.

Es hat sich in diesem Zusammenhang als besonders vorteilhaft erwiesen, wenn der Code für das Verschlußteil der Liefereinheit zumindest als Komplementärwert zu der dem Empfänger der Liefereinheit zugeordneten Kundennummer gebildet wird. Hierdurch wird auf einfache Weise sowohl der Verriegelungscode als auch der Öffnungscode erzeugt.

Hinsichtlich des Systems wird die vorstehende Aufgabe durch die Merkmale des Anspruchs 5 gelöst. Vorteilhafte Ausgestaltungen finden sich in den Unteransprüchen 6 bis 10. Im Zusammenhang mit diesen Ausgestaltungen treten die gleichen Vorteile auf, wie sie vorstehend in Verbindung mit dem Verfahren erläutert worden sind.

So hat es sich insbesondere als vorteilhaft erwiesen, wenn das mobile Lese- und Auswertegerät über einen Sende- und Empfangsteil mit einem Rechner, vorzugsweise einem Zentralrechner zum Austausch von Informationen, insbesondere drahtlos in Verbindung steht. Der genannte Rechner kann in Kommunikationverbindung mit den Kunden, vorzugsweise durch Fax-Übermittlung stehen.

Wie bereits mehrfach angesprochen wurde, können die erste Identifikationskennung, die zweite Identifikationskennung und/oder die auftragsbezogene Kennung in Form maschinenlesbarer Codes, vorzugsweise Barcodes vorliegen. Hierbei kann die codierte zweite Identifikationskennung ein Komplementärcode zu der codierten ersten Identifikationskennung sein.

Wie dies ebenfalls bereits vorstehend angesprochen worden ist, kann die Liefereinheit ein Verschlußteil aufweisen, daß nach seinem Verriegeln nur mittels einem zu der jeweiligen Liefereinheit temporär eindeutig gehörenden Schlüssel und dgl. wieder lösbar ist. Hierbei kann der Schlüssel durch die Kundennummer des Auftraggebers gebildet sein.

Als besonders vorteilhaft haben sich das erfindunggemäße Verfahren und/oder das erfindungsgemäße System zur Kommisionierung und Ausliefern von Artikeln des Einzelhandels erwiesen.

Weitere vorteilhafte Ausgestaltungen werden nachstehend anhand der beigefügten Zeichnungsfiguren erläutert. Hierbei ist:
- Figur 1: ein Ablaufdiagramm zur Darstellung eines Bestellvorgangs im Rahmen des erfindungsgemäßen Verfahrens;
- Figur 2: ein weiteres Ablaufdiagramm zur Darstellung der Kommissionierung im Rahmen des erfindungsgemäßen Verfahrens;
- Figur 3: ein weiteres Ablaufdiagramm zur Darstellung der Auslieferung im Rahmen des erfindungsgemäßen Verfahrens;
- Figur 4: eine geschnittene Draufsicht auf eine Aufbewahrungseinheit gemäß der vorliegenden Erfindung;
- Figur 5: eine Vorderansicht der in Figur 4 gezeigten Aufbewahrungseinheit mit geschlossener Sperrklappe, aber geöffneter Fronttür;
- Figur 6: eine vergrößerte Ansicht einer bei der erfindungsgemäßen Aufbewahrungseinheit verwendeten Verriegelungseinrichtung;
- Figur 7a bis 7c: eine Seiten-, Vorder- und Draufsicht auf eine Liefereinheit ohne Deckel;
- Figur 8a bis 8c: eine Seiten-, Vorder- und Draufsicht auf einen Deckel für die in den Figuren 7a bis 7c gezeigte Liefereinheit; und
- Figur 9a bis 9c: eine Seiten-, Vorder- und Draufsicht auf ein gegenüber der in den Figuren 7a bis 7c gezeigten Liefereinheit vergrößert dargestellten Verschlußteil.

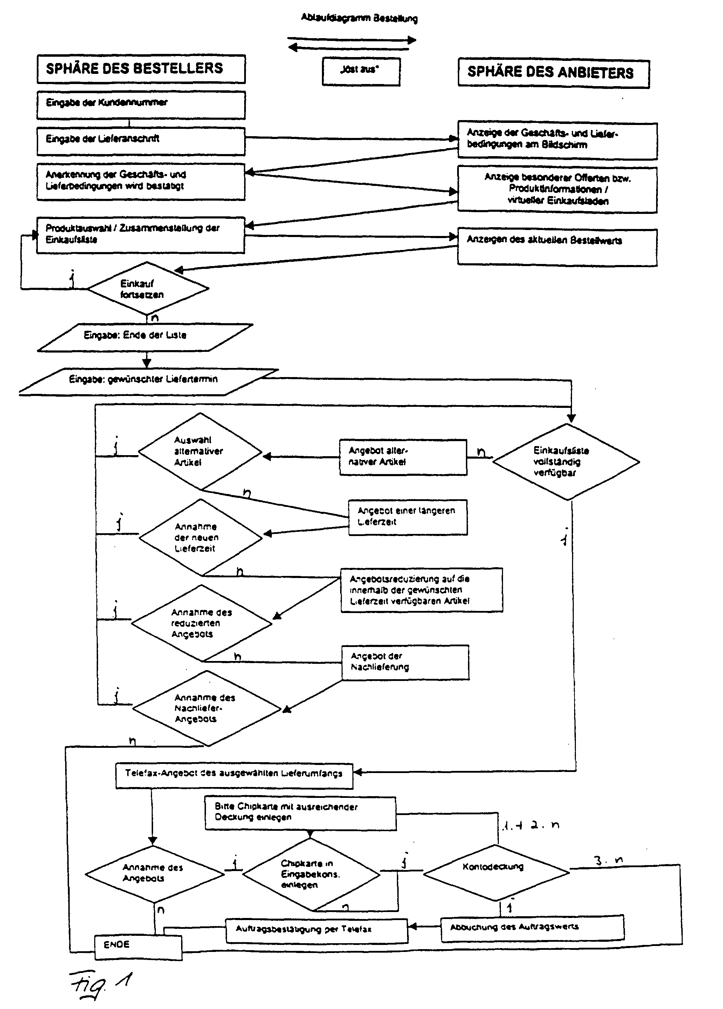

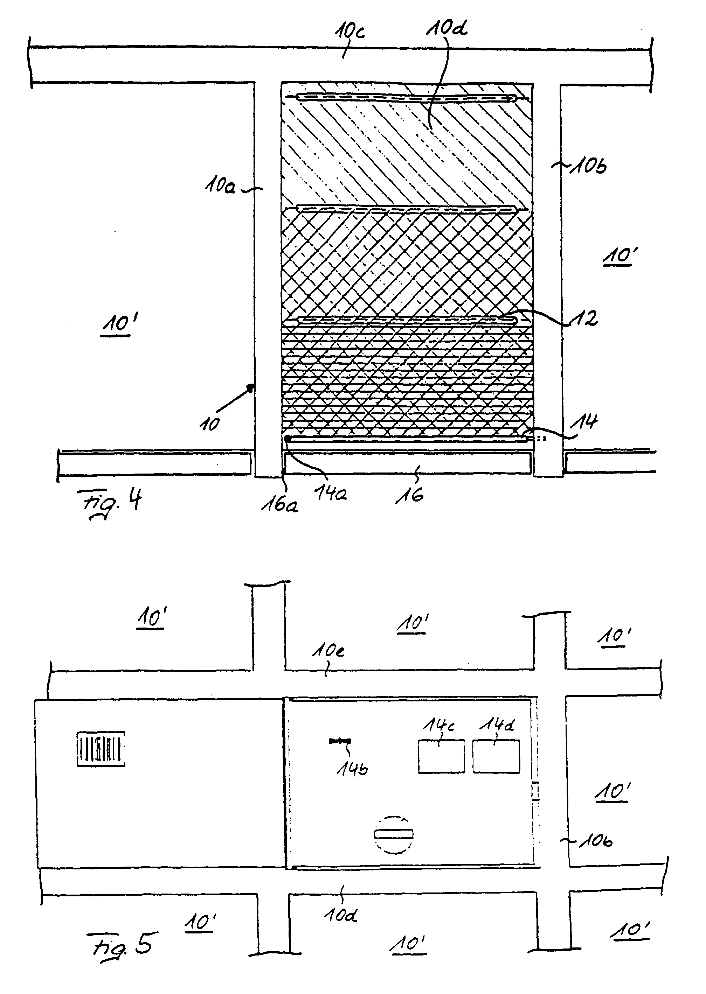

Die Vorgehensweise bei dem erfindungsgemäßen Verfahren wird nun nachstehend anhand der drei in den Figuren 1 bis 3 gezeigten Ablaufdiagramme dargestellt. Das Verfahren wird hierbei beispielhaft an Hand der Bestellung eines Kunden für Lebensmittel erläutert, wobei dieser Kunde Eigentümer oder Mieter einer später noch im Zusammenhang mit den Figuren 4 bis 6 erläuterten Aufbewahrungseinheit 10 ist. Es wird dabei vorausgesetzt, daß diesem Kunden eine Kundennummer bereits zugewiesen worden ist. Weiterhin wird vorausgesetzt, daß der Kunde über eine Telefaxverbindung und/oder On-line-Verbindung mit dem Zentralrechner des Anbieters und/oder mit dem Rechner eines von mehreren regional zuständigen Verteilzentren des Anbieters, der mit dem Zentralrechner in Verbindung stehen kann. Bei diesem Verteilzentrum kann es sich um ein entsprechend ausgerüstetes Großlager des Anbieters handeln.

In diesem Zusammenhang ist noch zu bemerken, daß das erfindungsgemäße Verfahren nicht auf den Einsatz einer On-line-Verbindung zwischen dem Kunden und dem Zentralrechner und/oder dem Rechner des Verteilzentrums (der nachstehend auch als VZ-Rechner bezeichnet wird) beschränkt ist, sondern es kann auch jede andere, eine Kommunikation über eine Distanz ermöglichende Form einer Verbindung vorgesehen werden. In diesem Fall müssen die nachstehend geschilderten Schritte des erfindungsgemäßen Verfahrens entsprechend angepaßt werden.

Das erfindungsgemäße Verfahren wird dadurch in Gang gesetzt, daß ein Kunde eine On-line-Verbindung mit dem Zentralrechner des Anbieters herstellt. Nach dem die On-line-Verbindung aufgebaut worden ist, gibt der Kunde zwecks Identifizierung seine Kundennummer ein. Weiterhin gibt er seine aktuelle Lieferanschrift, d.h. insbesondere die Lieferanschrift seiner Aufbewahrungseinheit 10 an. Alternativ kann vorgesehen sein, daß der Zentralrechner an Hand der Kundennummer die Lieferanschrift aus einem abgespeicherten Datenbestand an Lieferanschriften von Kunden bzw. Aufbewahrungseinheiten selber entnimmt und dem Kunden lediglich zur Überprüfung anzeigt. Anhand dieser Zustelladresse bzw. Lieferanschrift erfolgt die Zuordnung zu der für die Zustelladresse bzw. Lieferanschrift zuständigen zweiten Rechnerebene, nämlich dem VZ-Rechner des Verteilzentrums. Von dort aus erfolgt die Abfrage nach der gewünschten Lieferart: S-Boxen-, Bringdienst- oder Pickup-Variante.

Nach Anzeige der Geschäfts- und Lieferbedingungen seitens des VZ-Rechners an dem Bildschirm des Kunden und ihre Annahme seitens des Kundens durch Bestätigung kann der Zentralrechner am Bildschirm des Kunden besondere Offerten und Produktinformationen wiedergeben. Dieser Punkt kann aber auch durch einen entsprechenden Befehl seitens des Kunden übersprungen werden.

Anschließend beginnt der Kunde seinen Einkauf in dem von dem VZ-Rechner bereitgestellten "virtuellen" Laden. Hierbei können seine Bestellungen kontinuierlich zusammen mit dem aktuellen, bisher aufaddierten Gesamtpreis angezeigt werden. Ist die Bestellung durch den Kunden beendet, kann dieser einen bestimmten Lieferzeitpunkt eingeben oder alternativ der VZ-Rechner auf Grundlage der verfügbaren Artikel und/oder der Dauer der Beschaffung von im Augenblick im Verteilzentrum nicht vorhandener Artikel einen Liefertermin vorschlagen. Gleichzeitig kann der VZ-Rechner für im Augenblick nicht vorhandene Artikel alternative, im Verteilzentrum verfügbare Artikel vorschlagen, um den vom Kunden gewünschten Lieferzeitpunkt zu ermöglichen. Der Kunde hat dann die Möglichkeit, entweder den vom VZ-Rechner vorgeschlagenen Lieferzeitpunkt für alle vom Kunden gewünschten Artikel oder einen früheren Lieferzeitpunkt mit vom VZ-Rechner alternativ vorgeschlagenen Artikeln zu akzeptieren oder auf dem von ihm gewünschten Lieferzeitpunkt mit einer um die im Augenblick im Verteilzentrum nicht verfügbaren Artikel reduzierten Bestellung zu bestehen.

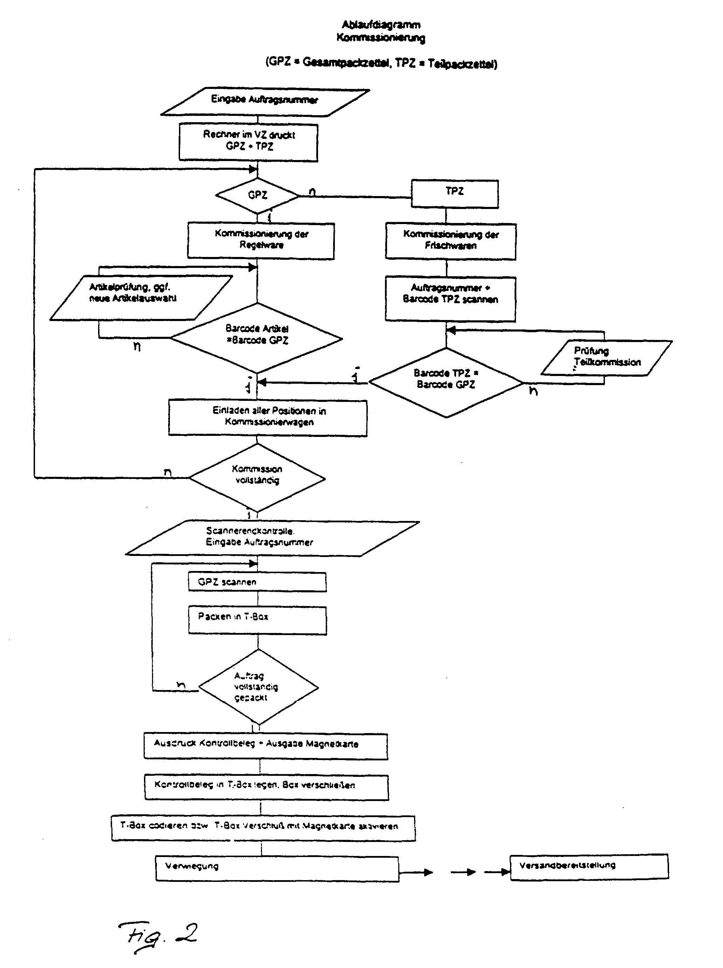

Nach der Reservierung der betreffenden Artikel durch den VZ-Rechner für den vom Kunden bestimmten Liefertermin übermittelt der VZ-Rechner ein entsprechendes Angebot, d.h. eine durch den VZ-Rechner erstellte, die Bestellung der Artikel mit Einzelpreis und Gesamtpreis wiederholende Liste zur Überprüfung und Bestätigung an den Kunden. Nach der Bestätigung dieses Angebots durch den Kunden wird dieser durch den VZ-Rechner zur Zahlung aufgefordert. Dies kann entweder durch Eingabe eines Abbuchungsauftrags seitens des Kundens an den VZ-Rechner, durch Eingabe der Nummer einer Kreditkarte des Kunden, durch Einführen einer Geld-Chip-Karte des Kunden in ein an seinen PC bzw. seiner Kommunikationseinrichtung angeschlossenes Lesegerät etc. erfolgen. Nach dem der VZ-Rechner einen "Zahlungseingang" verzeichnet hat, wird der Auftrag angenommen, durch den VZ-Rechner dem Auftrag eine auftragsbezogene Kennung zugewiesen, die nachstehend auch als Auftragsnummer bezeichnet wird, und diese dem Kunden mitgeteilt sowie ggf. der Auftrag schriftlich noch einmal per Fax bestätigt. Hiermit ist das in Figur 1 gezeigte Ablaufdiagramm beendet und das erfindungsgemäße Verfahren wird mit dem in Figur 2 gezeigten Ablaufdiagramm fortgesetzt. Da die vorstehend geschilderte Kommunikation zwischen VZ-Rechner und dem PC bzw. seiner Kommunikationseinrichtung des Kunden On-line erfolgt, ist der bisher für den Kunden benötigte Zeitaufwand äußerst gering.

Der VZ-Rechner im Verteilzentrum erstellt aufgrund der Auftragsbestätigung einen Auftrags- bzw. Packzettel und druckt diesen aus und/oder übermittelt diesen an einen Kommissionierroboter des Verteilzentrums. Der Packzettel enthält die Nummer dieses Auftrages in codierter, maschinenlesbarer Form sowie die einzelnen Artikel mit Stückzahl und Menge ebenfalls in codierter, maschinenlesbarer Form. Wird der Packzettel ausgedruckt, so können die Artikel zusammen mit Menge und Stückzahl zusätzlich in Klartext aufgeführt sein. Aus einem Packzettel können sich mehrere Teilpackzettel ableiten, da in den Frischwarenabteilungen (Fleisch, Käse, Obst, Gemüse etc.) jeweils eine Teilkommissionierung erfolgt (um den Packzettel von dem oder den Teilpackzetteln (= TPZ) abzugrenzen, wird dieser nachstehend und in Figur 2 als Gesamtpackzettel (= GPZ) bezeichnet). Ein Teilpackzettel enthält ebenfalls neben den gelisteten Artikeln in codierter, maschinenlesbarer Form die codierte Auftragsnummer, um die Zuordnung zum jeweiligen Gesamtauftrag sicherstellen zu können.

Es ist zu bemerken, daß der maschinenlesbare Code für die Auftragsnummer, die Artikel mit Stückzahl und Menge sowie weitere, nachstehend noch erwähnte Identifikationskennungen, Adressen etc. ein Barcode sein kann.

Nach Übermittlung des Gesamtpackzettels an den Kommissionierroboter sowie ggf. der Teilpackzettel an weitere Kommissionierroboter (selbstverständlich kann auch nur ein Kommissionierroboter beide Packzettelformen abarbeiten) fährt der Kommissionierroboter mit einem Kommissionierbehälter oder Kommissionierwagen durch das Verteilzentrum. Wenn er einen Artikel aus dem Regal genommen hat, wird der mittels eines Scanners erfaßte Barcode an der Verpackung des Artikels mit dem des Gesamt- oder Teilpackzettels verglichen. Hierdurch wird eine erste Kontrolle erreicht. Wird der Kommissionierroboter von einer Bedienperson überwacht, so kann durch ein optisch-akustisches Signal des Scanners zusätzlich vermieden werden, daß der falsche Artikel und/oder die falsche Stückzahl oder Menge ergriffen werden.

Die von dem Zentralrechner erstellte Reihenfolge der Artikel auf einem Gesamtpackzettel kann sich nach der Stabilität der Verpackungen und der Empfindlichkeit der Waren richten. Nach diesen Kriterien erfolgt auch die Anordnung der Artikel im Verteilzentrum, um kürzeste Kommissionierwege und -zeiten zu erhalten. Aus diesem Grunde werden die Produkte der Frischwarenabteilungen am Ende des jeweiligen Kommissioniervorgangs plaziert und nach dem Abgleich der Barcodes zwischen Teil- und Gesamtpackzettel der Kommission zugeführt. Daneben enthält der Kommissionierbehälter des Roboters unterschiedliche Unterteilungen, um eine Vorsortierung der Artikel zu ermöglichen und ein artikelgerechtes Packen zeitsparend zu gewährleisten.

Ist der Gesamtpackzettel abgearbeitet, fährt der Kommissionierroboter zu einem stationären Scannergerät als weitere Kontrolle. Das stationäre Scannergerät ist mit einer nachstehend als Auswertegerät bezeichneten Einrichtung zum Erfassen der Stückzahl und/oder der Menge eines Artikels verbunden. Hier wird die Auftragsnummer aufgerufen und eine in Figur 2 als T-Box bezeichnete Liefereinheit entsprechend des Warenvolumens ausgewählt. Die Artikel bzw. Teilkommissionen der Frischwarenabteilungen werden dem Behälter des Kommissionierroboters entnommen, durch das Scanner- und Auswertegerät geführt und unmittelbar in die Liefereinheit gepackt. An dieser Stelle erfaßt das Scannergerät in Verbindung mit dem Auswertegerät alle Einzelpositionen der Kommission sowohl mengenmäßig als auch mit ihrem tatsächlichen Liefergewicht. Durch diesen Vorgang ist eine zweite Kontrolle gegeben, die bei konsequenter Anwendung Falschlieferungen ausschließt.

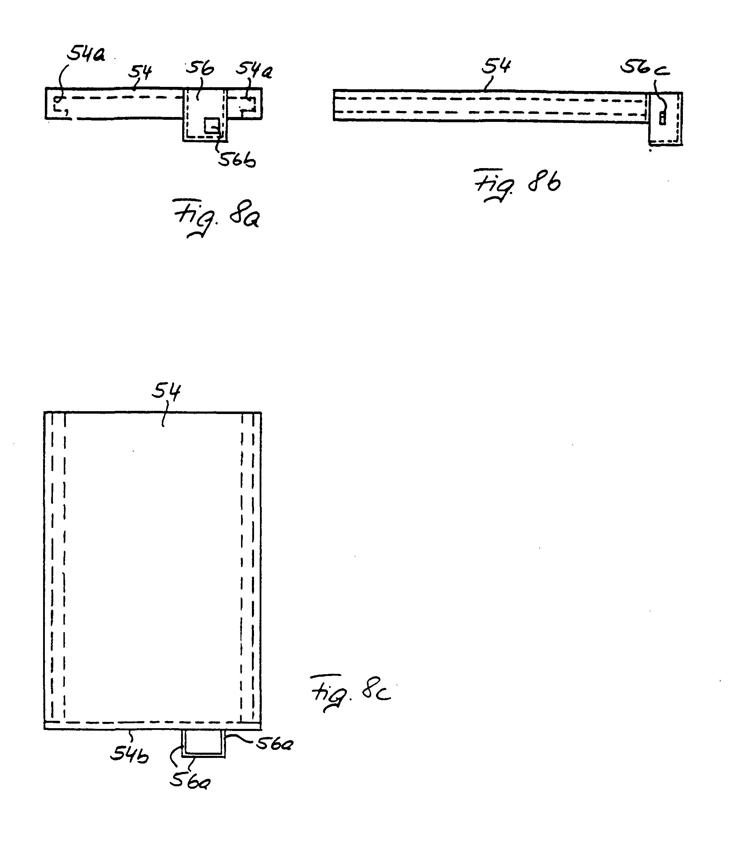

Die Beendigung des Kontroll- und Packvorganges hat die Ausgabe eines Kontrollbeleges zur Folge, der in die Liefereinheit gelegt wird. Nun wird die Liefereinheit verschlossen und in der Weise verriegelt, daß sie zerstörungsfrei nur vom Kunden geöffnet werden kann. Dies geschieht folgendermaßen (vgl. hierzu auch die nachfolgende Beschreibung in Verbindung mit den Figuren 7a bis 9c):

Das Auswertegerät gibt z.B. auf einer Magnetkarte (Parkhaus- bzw. Parkschein-Prinzip) die codierte Kunden- und Auftragsnummer aus, wobei, falls die Auftragsnummer anders codiert ist, die Auftragsnummer zusätzlich auch als Barcode ausgegeben wird. Diese Magnetkarte wird als temporärer Speicher verwendet, mit dem in das Verschlußteil der Liefereinheit vorübergehend die Daten eingegeben werden, die es erlauben, daß nur der Besitzer der Kundenkarte das Verschlußteil der Liefereinheit wieder öffnen kann. Mit anderen Worten wird es hierdurch ermöglicht, eine Liefereinheit für den speziellen Auftrag eines Kunden verwenden zu können und anschließend die Liefereinheit für einen Auftrag eines anderen Kundens einsetzen zu können. Selbstverständlich kann dies auch in einer anderen Art und Weise geschehen, beispielsweise dadurch, daß der Verriegelungsmechanismus mit einem oder mehreren EPROMs ausgestattet ist, in denen die vorstehend erwähnten Daten temporär abgespeichert werden.

Nach dem Einschieben der von dem Auswertegerät erstellten Magnetkarte in einen hierfür vorgesehenen Schlitz des Verschlußteils der Liefereinheit verriegelt der Mechanismus (Prinzip Scheckkartenleser). Nach dem Verschließen der T-Box wird die Magnetkarte in einem Sichtfenster der T-Box so plaziert, daß der aufgedruckte Auftragsbarcode an immer gleicher Stelle erscheint und die Karte erst wieder nach Öffnung der T-Box zerstörungsfrei entnommen werden kann.

Nur für den Besitzer der Kundenkarte ist der Gegencode (= Kundennummer) zur Entriegelung des Verschlußteils der Liefereinheit vorhanden, wobei das Funktionsprinzip "Wert + Komplementärwert" z.B. 0123456789 + 9876543210 = 9999999999 = Öffnungscode der Liefereinheit Anwendung finden kann.

Danach wird die Liefereinheit über eine Waage geführt. Die Waage ist mit dem Auswertegerät gekoppelt und vergleicht das zuvor ermittelte Warengewicht mit dem tatsächlichen Liefergewicht der Liefereinheit. Nur bei Gleichheit (+/- Toleranz) von theoretisch und praktisch ermitteltem Gewicht wird die Endkontrolle zur nächsten Auftragsbearbeitung freigegeben. Damit wird sichergestellt, daß nach der Endkontrolle keine unberechtigten Bestandsveränderungen vorgenommen werden können.

Anschließend wird an der Außenseite der Liefereinheit an einer vorbestimmten Stelle die Auftragsnummer in Form eines maschinenlesbaren Codes, vorzugsweise einem Barcode aufgebracht. Dies kann auch im Zusammenhang mit der von dem Auswertegerät erstellten Magnetkarte erfolgen, wobei dann sichergestelltsein muß, daß dieser Abschnitt der in den Verriegelungsmechanismus irreversibel eingeschobenen Magnetkarte von außen zugänglich ist.

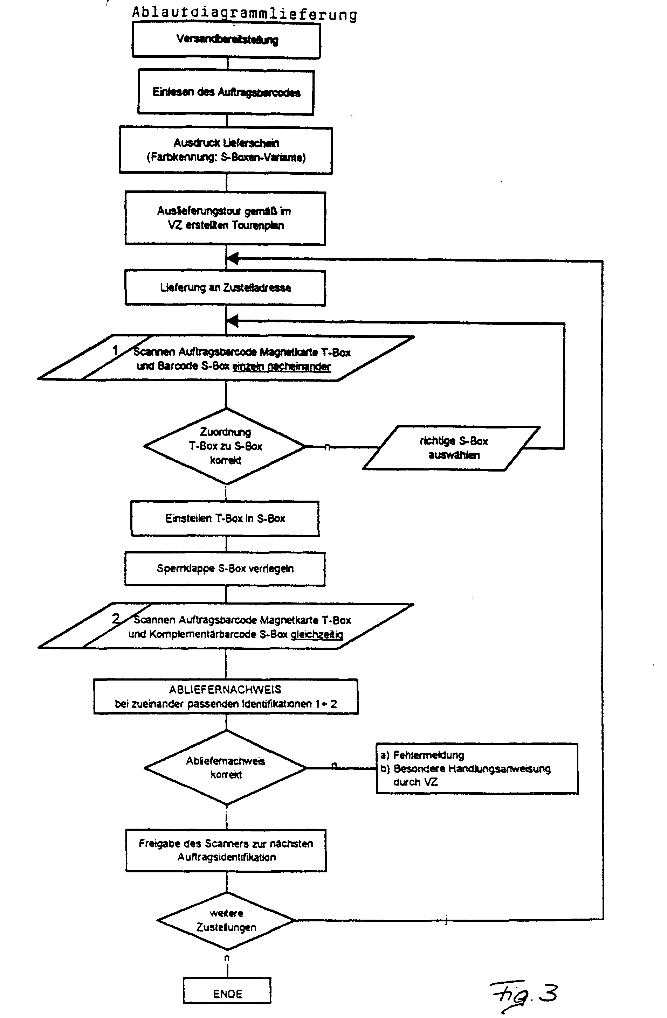

Die Liefereinheit wird nun zum Versand bereitgestellt, und zwar räumlich getrennt von dem Verschließen und Wiegen der Liefereinheit. Im Versandbereich wird, wie dies aus Figur 3 hervorgeht, die an der Außenseite der Liefereinheit angebrachte, codierte Auftragsnummer beispielsweise durch einen Scanner gelesen und die Auftragsabwicklung im Verteilzentrum durch das Ausdrucken eines Versandbelegs beendet, der alle nötigen Versanddaten erstmalig in Klarschrift (Auftragsnummer, Lieferanschrift etc.), aber auch in Form von Barcodes beeinhaltet. Je nach Art der Übergabe an den Kunden - S-Boxen, Bringdienst (= nur persönliche Ablieferung beim Kunden), Pickup ( = Abholung durch Kunden) - kann der Versandbeleg farblich gekennzeichnet sein.

Mit der räumlichen Trennung der Bereiche Kommissionierung/Packen und Versandbereitstellung einerseits sowie der Trennung von codierten und klarschriftlesbaren Auftrags- und Versandinformationen andererseits wird sichergestellt, daß dem Personal jeweils nur das zur Abwicklung bzw. Lieferung notwendige Minimum an Auftragsdaten zur Kenntnis gelangt. Die notwendigen Versandinformationen (Auftragscode, Zustelladresse oder Kundennummer) werden in Abhängigkeit von der gewünschten Liefervariante vorab in einem mobilen Handscanner oder im VZ-Rechner hinterlegt, so daß mittels unmanipulierbarer Scanvorgänge der unterschriftsfreie Abliefernachweis erstellt wird. Dieses Verfahren schließt Falschzustellungen aus und bietet damit alle Möglichkeiten, Datenschutzmaßnahmen in jeglicher Form Rechnung zu tragen.

Mit dem erfindungsgemäßen Verfahren wird u.a. ein Maximum an Kundenservice und Kundenbindung angestrebt: Die nachweisbar verwechslungsfreie und vollständige Zustellung ohne persönliche Anwesenheit des Empfängers. Zu diesem Zweck ist es erforderlich, die stationären Aufbewahrungseinheiten in Kundennähe zu errichten, die vom Bringdienst angefahren und innerhalb des vereinbarten Lieferzeitraumes bestückt werden.

Nachstehend wird in Verbindung mit den Figuren 3 bis 5 eine Aufbewahrungseinheit erläutert:

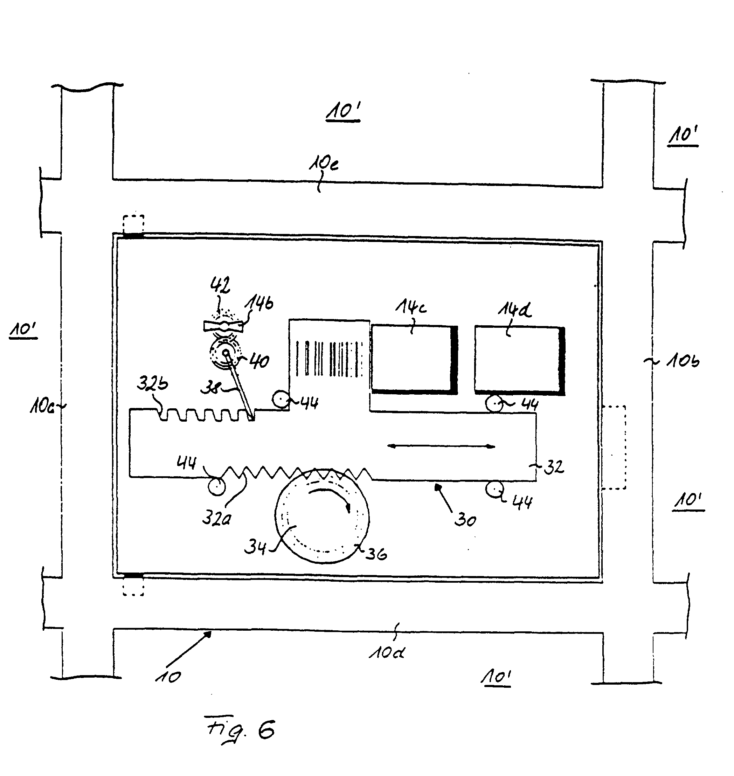

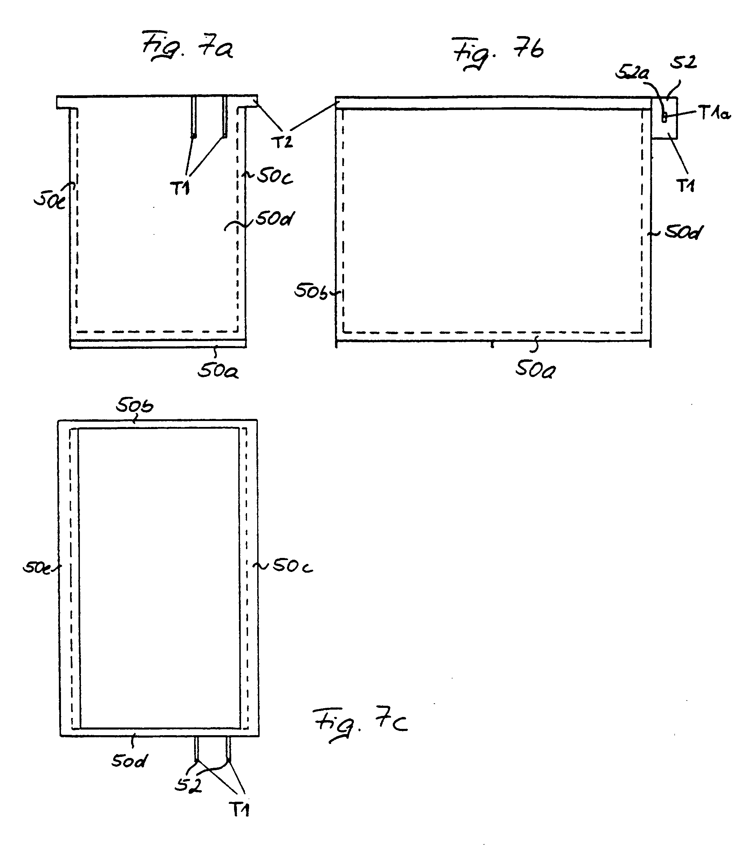

In Figur 4 ist eine Aufbewahrungseinheit 10 in geschnittener Draufsicht dargestellt. Wie aus den Figuren 4 bis 6 hervorgeht, ist die Aufbewahrungseinheit 10 Bestandteil einer Gruppe von Aufbewahrungseinheiten, die sich links und rechts und, wie dies insbesondere die Figuren 5 und 6 zeigen, oben und unten an die dargestellte Aufbewahrungseinheit 10 anschließen und als Aufbewahrungseinheiten 10' bezeichnet sind. Diese Gruppe an Aufbewahrungseinheiten 10, 10' kann beispielsweise im Rahmen einer Wohnanlage an einem für alle Bewohner zentralen Ort vorgesehen sein. Ebenso kann diese Gruppe an Aufbewahrungseinheiten 10, 10' an einem zentralen Ort innerhalb eines Unternehmens oder in dafür vorgesehenen Räumen (z.B. geeignet bei Wohnblocks) angeordnet sein.

Wie aus den Figuren 4 bis 6 hervorgeht, besteht eine Aufbewahrungseinheit 10 aus zwei vertikalen Seitenwänden 10a, 10b, einer vertikalen Rückwand 10c, einer horizontalen Bodenwand 10d und einer in Figur 4 abgenommenen, ebenfalls horizontalen Oberwand 10e. Die Seitenwände 10a, 10b, die Bodenwand 10d und die Oberwand 10e der betrachteten Aufbewahrungseinheit 10 bilden die Seitenwände bzw. die Oberwand und die Bodenwand benachbarter Aufbewahrungseinheiten 10'. Die Wände 10a - 10e können aus einem Material gefertigt sein, das ein gewaltsames Öffnen der Aufbewahrungseinheit 10 erschwert bzw. unmöglich macht. Weiterhin kann, insbesondere bei einer Anordnung von mehreren Aufbewahrungseinheiten 10, 10' in einer Gruppe, eine Kühlanlage vorgesehen sein, die das Innere der Aufbewahrungseinheiten 10, 10' auf eine zur Aufbewahrung und Frischhaltung von Lebensmitteln geeignete Temperatur abkühlt.

Die in das Innere der Aufbewahrungseinheit 10 weisende Seite der Bodenwand 10d ist mit insgesamt drei in gleichmäßiger Teilung angeordneten Nuten 12 versehen. Diese Nuten 12 dienen zur exakten Positionierung der nachstehend in Verbindung mit den Figuren 7a bis 9c noch näher erläuterten Liefereinheiten 50.

Wie durch die Schraffierung in Figur 4 wiedergegeben ist, können unterschiedlich große Liefereinheiten 50 in die Aufbewahrungseinheit 10 eingestellt werden. Die horizontal verlaufende Schraffur kennzeichnet den Platz, den die kleinste Größe an Liefereinheit 50 beansprucht, die von links unten nach rechts oben verlaufende Schraffur den Platz einer mittleren Liefereinheit 50 und die von links oben nach rechts unten verlaufende Schraffur den Platz einer großen Liefereinheit 50. Wie sich hieraus unmittelbar ergibt, kann die dargestellte Aufbewahrungseinheit 10 entweder drei kleine Liefereinheiten 50, eine kleine und eine mittlere Liefereinheit oder nur eine große Liefereinheit 50 gleichzeitig aufnehmen. Selbstverständlich können die Aufbewahrungseinheiten 10, 10' auch einen größeren oder kleineren Innenraum aufweisen.

Die Aufbewahrungseinheit 10 besitzt weiterhin eine Sperrklappe 14 sowie eine Tür 16, die die von den Seitenwänden 10a, 10b, der Bodenwand 10d und der Oberwand 10e definierte Öffnung bündig verschließen. Dabei sitzt, von außen betrachtet, die Tür 16 vor der Sperrklappe 14. Die Sperrklappe 14 und die Tür 16 sind über jeweils ein unmittelbar benachbart zu der linken Seitenwand 10a angeordnetes Scharnier 14a, 16a in Horizontalrichtung schwenkbar an der Aufbewahrungseinheit 10 gelagert.

Die Sperrklappe 14 ist mit einer Verriegelungseinrichtung 30 versehen, die nachstehend im Zusammenhang mit der Figur 6 näher erläutert wird. Mittels der Verriegelungseinrichtung 30 kann die Sperrklappe 14 an der Seitenwand 10b der Aufbewahrungseinheit 10 verriegelt werden. Ein Öffnen der Sperrklappe 14 ist nur mittels eines nicht weiter dargesteliten, sich in Händen des Eigentümers oder Mieters dieser Aufbewahrungseinheit 10 befindlichen und nur für diese Einheit 10 verwendbaren Schlüssels möglich, der in das in Figur 5 erkennbare Schlüsselloch 14b eingeführt wird. Vorzugsweise ist dieser Schlüssel ein Doppelbartschlüssel.

Die Tür 16 kann, sofern sie zum Schutz der Sperrklappe 14 und insbesondere ihrer Verriegelungseinrichtung 30 beispielsweise gegen Vandalismus vorgesehen ist, durch ein Schloß geöffnet und verriegelt werden, das mittels eines nur für diese Tür 16 einsetzbaren, sich in Händen des Eigentümers oder Mieters dieser Aufbewahrungseinheit 10 befindlichen Schlüssels oder mittels eines für alle Türen 16 dieser Gruppe an Aufbewahrungseinheiten 10 verwendbaren, sich in Händen aller Eigentümer oder Mieter dieser Gruppe an Aufbewahrungseinheiten 10 sowie den Lieferanten von Liefereinheiten 50 befindlichen Generalschlüssels betätigt wird. Im Falle eines Generalschlüssels besteht aber auch die Möglichkeit, daß eine entsprechend große Tür 16 mehrere Aufbewahrungseinheiten 10 gleichzeitig abdeckt. Ist mit einer Beschädigung der Sperrklappe 14 bzw. der Verriegelungseinrichtung 30 nicht zu rechnen, so kann auch vorgesehen sein, daß die Tür 16 nur eine einfache Schnappverriegelung aufweist und von jedermann ohne weiteres geöffnet und geschlossen werden kann. Ebenso kann aber auch die Tür 16 gänzlich entfallen.

An der Innenseite der Tür 16 ist ein Ort vorgesehen, an der eine codierte erste Identifikationskennung für die Aufbewahrungseinheit 10 angebracht werden kann (sofern keine Tür 16 vorhanden sein sollte, ist die codierte erste Identifikationskennung entsprechend an einer anderen Stelle anzubringen). Diese erste Identifikationskennung bildet die diese Aufbewahrungseinheit 10 eindeutig identifizierende "Zustelladresse". In dem dargestellten Beispiel ist die erste Identifikationskennung durch einen Barcode gebildet.

Die Sperrklappe 14 besitzt weiterhin zwei Sichtfenster 14c, 14d. In dem, bezogen auf Figur 5, linken Sichtfenster 14c wird bei verriegelter Verriegelungseinrichtung 30 eine zweite codierte Identifikationskennung der Aufbewahrungseinheit 10 sichtbar, wogegen in dem, ebenfalls bezogen auf Figur 5, rechten Sichtfenster 14d nach dem Einstellen einer Liefereinheit 50 die an der Liefereinheit 50 angebrachte, codierte Auftragsnummer sichtbar wird. Die Sichtfenster 14c, 14d können aus Glas oder einem anderen durchsichtigen Material gefertigt sein. In diesem Zusammenhang ist zu bemerken, daß auch die zweite Identifikationskennung (vgl. Figur 6) in Form eines Barcodes vorliegt.

In Figur 6 ist die Verriegelungseinrichtung 30 in Form eines Aufbruches der Sperrklappe 14 näher dargestellt. Die Verriegelungseinrichtung 30 besteht aus einem Schließriegel 32, der in der Ansicht die Form eines auf dem Kopf stehenden Buchstabens "T" aufweist. Das, bezogen auf Figur 6, rechte freie Ende des Horizontalschenkels des Schließriegels 32 greift im verriegelten Zustand der Verriegelungseinrichtung 30 in eine entsprechende in Figur 6 nur angedeutete Ausnehmung in der, bezogen auf Figur 6, rechten Vertikalseitenwand 10b der Aufbewahrungseinheit 10 ein.

Auf der nach außen weisenden Seite des Vertikalschenkeis des Schließriegels 32 ist die zweite codierte Identifikationskennung angebracht, die bei einer Bewegung des Schließriegels 32 aus der in Figur 6 dargestellten, unverriegelten Stellung in die verriegelte Stellung in dem, bezogen auf Figur 6, linken Sichtfenster 14c sichtbar wird. Zum Bewegen des Schließriegels 32 in die Schließstellung ist ein drehbarer Schließknauf 34 vorgesehen, der direkt mit einem Zahnrad 36 gekuppelt ist. Das Zahnrad 36 steht in Eingriff mit einem ersten Zahnstangenabschnitt 32a, der, bezogen auf Figur 6, an der linken Unterseite des Horizontalschenkels des Schließriegels 32 ausgebildet ist. Beim Verriegeln der Verriegelungseinrichtung 30 wird diese mittels des Schließknaufes 34, bezogen auf Figur 6, nach rechts bewegt.

Bei der Bewegung des Schließriegels 32 in seine Verriegelungsstellung gleitet ein Arretierhebel 38 über einen zweiten Zahnstangenabschnitt 32b, der, bezogen auf Figur 6, an der linken Oberseite des Schließriegels 32 vorgesehen ist. Um diese Gleitbewegung zu unterstützen, ist das, bezogen auf Figur 6, untere Ende des Arretierhebels 38 angefast. Hat der Schließriegel 32 seine Verriegelungsstellung erreicht, befindet sich der Arretierhebel 38 in einer Stellung zwischen zwei aufeinanderfolgenden Zähnen des zweiten Zahnstangenabschnitts. Da zum einen der Schließknauf 34 das Zahnrad 36 und damit den Schließriegel 32 nur in dessen Verriegelungsstellung bewegen kann und zum anderen der Arretierhebel 38 nur durch den sich in Händen des Eigentümers oder Mieters dieser Aufbewahrungseinheit 10 befindlichen Schlüssels bewegt werden kann, ist somit die Sperrklappe 14 und damit die Aufbewahrungseinheit 10 verriegelt.

Wie bereits vorstehend erwähnt wurde, läßt sich der Arretierhebel 38 nur mittels des Schlüssels aus seiner Arretierstellung herausbewegen. Hierzu ist der Arretierhebel 38 mit einem Zahnrad 40 drehfest gekuppelt, welches in Eingriff mit einem weiteren Zahnrad 42 steht, das durch den Schlüssel bewegt wird. Bei einer Drehbewegung des Schlüssels, insbesondere in Uhrzeigerrichtung, wird ebenfalls das Zahnrad 42 und damit das Zahnrad 40 in Drehung versetzt. Durch die Drehung des Zahnrades 40 wird der Arretierhebel 38 verschwenkt, der bei dieser Schwenkbewegung den Schließriegel 32 aus seiner Verriegelungsstellung freigibt und der somit in seine Öffnungsstellung durch Drehung des Schließknaufs 34, insbesondere in Gegenuhrzeigerrichtung, gebracht werden kann.

Es ist noch zu bemerken, daß zur sicheren Führung des Schließriegels 32 Führungsrollen 44 vorgesehen sind.

Zum Bestücken einer Aufbewahrungseinheit 10 mit einer oder mehreren Liefereinheiten öffnet der Bringdienst die Tür 1 6 der jeweiligen Aufbewahrungseinheit 10 ggf. mit einem Universalschlüssel (vgl. hierzu auch das Ablaufdiagramm der Figur 3). Danach scannt er mit einem mobilen, nicht weiter dargestellten Lese- und Auswertegerät zum einen die auf der Liefereinheit befindliche, codierte Auftragsnummer und dann die an der Innenseite der Tür 16 der Aufbewahrungseinheit 10 befindliche codierte erste Identifikationskennung. Stimmen Auftragsnummer und erste Identifikationskennung überein, so wird dies in dem mobilen Lese- und Auswertegerät zwecks Protokollierung abgespeichert und/oder ggf. an einen Rechner ebenfalls zwecks Protokollierung übermittelt. Stimmen Auftragsnummer und Zustelladresse (= erste Identifikationskennung) nicht überein, kann ein optisch-akustisches Signal des mobilen Lese- und Auswertegerätes darauf hinweisen, daß ein Zustellfehler vorliegt. Hierdurch wird vermieden, daß eine Liefereinheit 50 beim Einstellen in eine Aufbewahrungseinheit 10 vertauscht wird.

Bei zueinander passender Auftragsnummer und erster Identfikationskennung wird dann die Sperrklappe 14 geöffnet, die sich nach der letzten Entnahme einer Liefereinheit durch den Kunden in einem nicht verriegelten Zustand befindet. Danach erfolgt die eventuelle Entnahme einer leeren, sich in der Aufbewahrungseinheit 10 befindlichen Liefereinheit 50. Nach dem Einstellen der neuen, anzuliefernden Liefereinheit 50 in die Aufbewahrungseinheit 10 wird die Sperrklappe 14 geschlossen und der Schließriegel 32 der Verriegelungseinrichtung 30 durch Drehen des Schließknaufs 34 verriegelt. Die Öffnung der Sperrklappe 14 kann nur mit dem zu dieser Sperrklappe 14 eindeutig gehörenden Schlüssel des Empfängers erfolgen. Die Sperrklappe 14 blockiert die Entnahme der eingestellten Liefereinheit 50.

Nach dem Einstellen der neu anzuliefernden Liefereinheit 50 und Schließen der Sperrklappe 14 erscheint in dem, bezogen auf Figur 6, rechten Sichtfenster 14d die sich an der Außenseite der Liefereinheit 50 befindliche, codierte Auftragsnummer. Weiterhin erscheint nach der Verriegelung des Schließriegels 32 in dem, bezogen auf Figur 6, linken Sichtfenster 14c die zweite Identifikationskennung der Aufbewahrungseinheit 10. Nur das gleichzeitige Einlesen beider Codes - zweite Identifikationskennung und Auftragsnummer - durch das mobile Lese- und Auswertegerät ergibt den Abliefernachweis.

Neben einem zeitgleichen Einlesen kann auch ein Einlesen der beiden Codes kurz hintereinander erfolgen. Hierbei muß aber der Zeitrahmen so eng gesetzt werden, daß eine Manipulation ausgeschlossen ist. Eine derartige Manipulation kann beispielsweise darin bestehen, daß die Liefereinheit 50 nicht in die Aufbewahrungseinheit 10 eingestellt wird, diese aber verschlossen und verriegelt wird. Würde in einem solchen Fall der Zeitrahmen für ein aufeinanderfolgendes Lesen der beiden Codes zu groß bemessen sein, bestünde die Gefahr, daß die Ablieferung dadurch simuliert wird, daß die nach dem Verriegeln sichtbare, zweite Identifikationskennung und anschließend die codierte Auftragsnummer an der Liefereinheit 50 gelesen werden (oder umgekehrt).

Nach dem gleichzeitigen Lesen der beiden Codes wird dieses Ergebnis in dem mobilen Lese- und Auswertegerät abgespeichert und ggf. an den Rechner übermittelt, um so die Ablieferung zu protokollieren. Somit ist sichergestellt, daß weder der Bringdienst unzulässigerweise einen Abliefernachweis erhält, noch der Kunde vorgeben kann, die Ware nicht erhalten zu haben.

Nachstehend wird noch der Aufbau einer als T-Box bezeichneten Liefereinheit 50 sowie deren Verschlußteil 58 in Verbindung mit den Figuren 7a bis 9c näher erläutert:

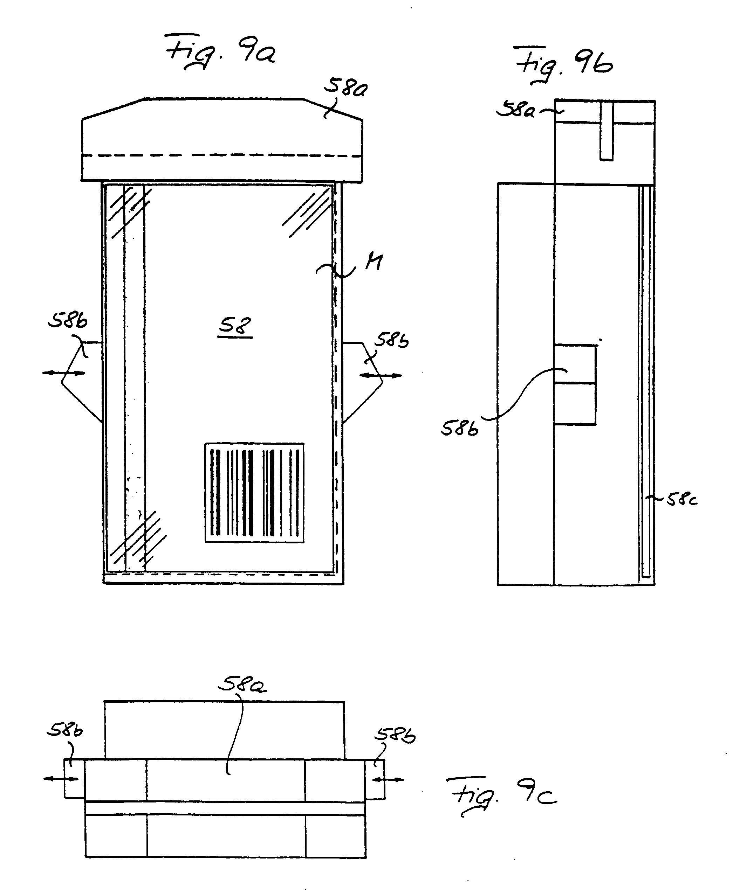

Die T-Box 50 weist einen Boden 50a sowie vier sowohl zu dem Boden 50a im rechten Winkel als auch untereinander im rechten Winkel angeordnete Seitenwände 50b-50e auf. Wie insbesondere aus der Figur 7c hervorgeht, weist die T-Box 50 die Form eines Rechtecks auf. Die, bezogen auf Figur 7a und 7b, oberen Ränder der beiden parallel zueinander verlaufenden Seitenwände 50c, 50e besitzen jeweils eine nicht näher bezeichnete, im wesentlichen horizontal verlaufende sowie nach außen weisende Auskragung, die von dem nachstehend im Zusammenhang mit den Figuren 8a bis 8c erläuterten Deckel 54 der T-Box 50 bei dessen Aufschieben umfaßt werden und dabei als Führung für den Deckel 54 dienen.

An der einen Stirnseite 50d besitzt die T-Box 50 zwei im wesentlichen rechtwinklig nach außen von dieser Wand 50d mit einem Abstand zueinander abstehende Sicherungsfahnen 52. Die Sicherungsfahnen 52 sind, wie dies inbesondere aus den Figuren 7a und 7c hervorgeht, außermittig an der Seitenwand 50d an deren oberen Ende angeordnet. Wie aus Figur 7b hervorgeht, besitzen die beiden Sicherungsfahnen 52 jeweils eine in der Mitte ihrer Fläche liegende Rechtecköffnung 52a, deren gemeinsame Mittenachse im wesentlichen parallel zu der Seitenwand 50d verläuft.

In den Figuren 8a bis 8c ist der zum Verschließen der T-Box 50 vorgesehene Deckel 54 gezeigt. Der Deckel 54 besitzt die gleiche Rechteckform wie die T-Box 50 und weist an seinen beiden Längsseiten zwei innenliegende Führungsnuten 54a auf, die die beiden Auskragungen an den beiden Längswänden 50c, 50e der T-Box 50 beim Aufschieben des Deckels 54 umfassen. An dem einen stirnseitigen Ende 54b des Deckels 54 ist eine Verschlußteil-Aufnahme 56 vorgesehen, die, wie dies insbesondere aus Figur 8c entnehmbar ist, in der gleichen Position wie die Sicherungsfahnen 52 der T-Box 50 angeordnet ist und die aus drei im rechten Winkel zueinander angeordneten und am stirnseitigen Ende 54b angebrachten Wänden 56a besteht. An der zum stirnseitigen Ende parallel verlaufenden Wand 56a der Verschlußteil-Aufnahme 56 ist im unteren rechten Viertel ein Sichtfenster 56b vorgesehen, in dem der Barcode einer nachstehend noch näher erläuterten Magnetkarte sichtbar wird. Die beiden sich unmittelbar an die Stirnseite 54b anschließenden Wände 56a der Verschlußteil-Aufnahme 56 sind ebenfalls in einer mittigen Anordnung mit einer rechteckförmigen Ausnehmung 56c versehen, die bei auf die T-Box 50 aufgeschobenem Deckel 54 mit den beiden rechteckförmigen Ausnehmungen 52a der Sicherungsfahnen 52 fluchten.

Ist der Deckel 54 auf eine T-Box 50 so aufgeschoben, daß die beiden Sicherungsfahnen 52 in der Verschlußteil-Aufnahme 56 liegen, wird ein in den Figuren 9a bis 9c gezeigtes Verschlußteil 58 in die Verschlußteilaufname 56 eingeführt. Das Verschlußteil 58 besitzt an seinem oberen Ende einen Magnetkartenleser 58a sowie in seinem Inneren eine Verriegelungseinrichtung mit zwei Verriegelungsklinken 58b die im verriegelten Zustand in die Ausnehmungen 52a der Sicherungsfahnen 52 sowie in die Ausnehmungen 56c des Verschluß-Aufnahmeteils 56 eingreifen.

Zum Verschließen der T-Box 50 wird der Deckel 54 mit seinen Nuten 54a über die Auskragungen der T-Box 50 geschoben, wodurch ein Abheben des Deckels 54 unmöglich wird. Dabei wird der Deckel 54 so weit geschoben, bis die Verschlußteil-Aufnahme 56 die Sicherungsfahnen 52 vollständig in der Weise umschließt, daß die rechteckförmigen Ausnehmungen 52a und 56c miteinander fluchten.

Das Verschlußteil 58 wird nun mittels Durchziehens der Magnetkarte M durch den Magnetkartenleser 58a, d.h. durch Eingabe der codierten Kundennummer, aktiviert, mit der Folge, daß sich die Klinken 58b genau noch einmal in das Innere des Verschlußteils 58 bewegen lassen. Nach dieser Nutzung wird die Magnetkarte M in ein Klarsichtfenster 58c des Verschlußteils 58 so eingesteckt, daß der Auftragsbarcode der Magnetkarte M auf der Frontseite sichtbar ist, wie dies in Figur 9a gezeigt ist.

Nun wird das Verschlußteil 58 in die Verschlußteil-Aufnahme 56 von oben eingesetzt. Dabei werden die Klinken 58b zunächst nach innen bewegt, bevor sie durch Einrasten in die übereinstimmenden Ausnehmungen 52a, 56c ein unberechtigtes Öffnen der T-Box 50 unmöglich machen.

Die T-Box 50 läßt sich erst wieder mit Hilfe der Kundenkarte öffnen, da nur das Einlesen der zu der Magnetkarte M komplementären Codierung durch den Magnetkartenleser 58a eine erneute Freigabe der Klinken 58b bewirkt. Dann kann zunächst das Verschlußteil 58 aus der Verschlußteil-Aufnahme 56 entnommen und anschließend der Deckel 54 von der T-Box 50 heruntergeschoben werden.

## Patentansprüche

1. Verfahren zum Verifizieren der richtigen Auslieferung von Liefereinheiten an verriegelbare Aufbewahrungseinheiten, die jeweils wenigstens eine Liefereinheit aufnehmen und die mit einer von außen zugänglichen ersten Identifikationskennung versehen sind,
wobei zumindest für die Anlieferung der Liefereinheit eine auftragsbezogene Kennung vergeben wird, die zusammen mit der ersten Identifikationskennung der zu beliefernden Aufbewahrungseinheit einem mobilen, die Liefereinheit bis zum Abliefern dieser in der Aufbewahrungseinheit begleitenden Lese- und Auswertegerät eingegeben und an der Liefereinheit in einer von außen zugänglichen Weise angebracht wird,
wobei an der Aufbewahrungseinheit vor dem Einstellen der Liefereinheit durch das mobile Lese- und Auswertegerät zunächst die erste Identifikationskennung der Aufbewahrungseinheit und anschließend, oder umgekehrt, die an der Liefereinheit angebrachte auftragsbezogene Kennung eingegeben und in dem mobilen Lese- und Auswertegerät abgespeichert werden,
wobei anschließend das mobile Lese- und Auswertegerät einen Vergleich zwischen der gelesenen Kombination aus erster Identifikationskennung und auftragsbezogener Kennung mit der in dem mobilen Lese- und Auswertegerät bereits vorher abgespeicherten Kombination aus erster Identifikationskennung und auftragsbezogener Kennung durchführt und das Ergebnis anzeigt, und
wobei nach dem Einstellen der Liefereinheit und Verriegeln der Verriegelungseinrichtung der Aufbewahrungseinheit die von außen zugängliche auftragsbezogene Kennung der Liefereinheit und eine nach dem Verriegeln über ein Fenster in der Aufbewahrungseinheit von außen zugängliche zweite Identifikationskennung der Aufbewahrungseinheit mittels dem mobilen Leseund Auswertegerät zumindest in einer vorbestimmten, kurzen Zeitspanne hintereinander erfaßt werden.

2. Verfahren nach Anspruch 1,
bei dem ein Zentralrechner vorgesehen wird, der die auftragsbezogene Kennung erstellt und der in Kommunikationsverbindung mit dem mobilen Lese- und Auswertegerät steht.

3. Verfahren nach Anspruch 1 oder 2,
bei dem die zweite Identifikationskennung einer Aufbewahrungseinheit durch eine zu der ersten Identifikationskennung dieser Einheit komplementäre Kennung gebildet wird.

4. Verfahren nach einem der Ansprüche 1 bis 3,
bei dem die zweite Identifikationskennung und die auftragsbezogene Kennung gleichzeitig durch das Lese- und Auswertegerät erfaßt werden.

5. System zum Verifizieren der richtigen Auslieferung von Liefereinheiten an Aufbewahrungseinheiten, insbesondere zum Durchführen des Verfahrens nach einem der Ansprüche 1 bis 4,
bei dem die Liefereinheit (50) eine an ihrer Außenseite angebrachte, die Liefereinheit (50) identifizierende auftragsbezogene Kennung aufweist,
bei dem die jeweils wenigstens eine Liefereinheit (50) aufnehmende Aufbewahrungseinheit (10) eine lösbare Verriegelungseinrichtung (30) aufweist,
bei dem die Aufbewahrungseinheit (10) eine erste Identifikationskennung aufweist,
bei dem die Aufbewahrungseinheit (10) eine zweite Identifikationskennung vorzugsweise in Form eines maschinenlesbaren Codes aufweist, die nach dem Verriegeln der Verriegelungseinrichtung (30) von außen zugänglich ist, und
bei dem ein die Liefereinheit (50) bis zum Abliefern dieser in der Aufbewahrungseinheit (10) begleitendes, mobiles Lese- und Auswertegerät zum Eingeben der Kennungen vorgesehen ist.

6. System nach Anspruch 5,
bei dem die Aufbewahrungseinheit (10) ein erstes Fenster (14d) aufweist, durch das bei eingestellter Liefereinheit (50) die auftragsbezogene Kennung von außen lesbar ist, und bei dem die Aufbewahrungseinheit (10) ein zweites Fenster (14c) aufweist, in dem nach dem Verriegeln der Verriegelungseinrichtung (30) die zweite Identifikationskennung von außen lesbar ist.

7. System nach Anspruch 5,
bei dem die Aufbewahrungseinheit (10) ein Fenster mit einem ersten Feld und einem zweiten Feld aufweist, wobei in dem ersten Feld bei eingestellter Liefereinheit (50) die auftragsbezogene Kennung von außen lesbar ist und wobei in dem zweiten Feld nach dem Verriegeln der Verriegelungseinrichtung (30) die zweite Identifikationskennung in der Weise von außen sichtbar ist, daß sie die auftragsbezogene Kennung zur Hälfte überdeckt.

8. System nach einem der Ansprüche 5 bis 7,
bei dem die erste sowie die zweite Identifikationskennung und/oder die auftragsbezogene Kennung maschinenlesbare Codes vorzugsweise Barcodes sind.

9. System nach einem der Ansprüche 5 bis 8,
bei dem die Liefereinheit (50) ein Verschlußteil (58) aufweist, der nach seinem Verriegeln nur mittels einem zu der jeweiligen Liefereinheit (50) temporär eindeutig gehörenden Schlüssel wieder lösbar ist.

10. Verwendung des Verfahrens nach einem der Ansprüche 1 bis 4 und des Systems nach einem der Ansprüche 5 bis 9 zur Kommissionierung und Auslieferung von Artikeln des Einzelhandels.

## Claims

1. A method of verifying the correct delivery of delivery units to lockable storage units which each receive at least one delivery unit and which are provided with a first identification sign which is accessible from the exterior,
wherein an order-related sign is allocated at least for delivery of the delivery unit, which order-related sign together with the first identification sign of the storage unit to be supplied is inputted into a mobile reading and evaluation device which accompanies the delivery unit until it is delivered in the storage unit, the order-related sign being applied to the delivery unit in a manner which is accessible from the exterior,
wherein at the storage unit before the delivery unit is put into same firstly the first identification sign of the storage unit and then the order-related sign applied to the delivery unit, or vice-versa, are inputted by the mobile reading and evaluation device, and stored in the mobile reading and evaluation device,
wherein then the mobile reading and evaluation device effects a comparison between the read combination of the first identification sign and the order-related sign with the combination, already previously stored in the mobile reading and evaluation device, of the first identification sign and the order-related sign, and displays the result, and
wherein after the delivery unit is put in and the locking device of the storage unit is locked the order-related delivery unit sign which is accessible from the exterior and a second storage unit identification sign which is accessible from the exterior after the locking operation by way of a window in the storage unit are detected in succession by means of the mobile reading and evaluation device at least in a predetermined short period of time.

2. A method as set forth in claim 1
wherein there is provided a central computer which produces the order-related sign and which is in communication with the mobile reading and evaluation device.

3. A method as set forth in claim 1 or claim 2
wherein the second identification sign of a storage unit is formed by a sign which is complementary to the first identification sign of said unit.

4. A method as set forth in one of claims 1 through 3
wherein the second identification sign and the order-related sign are simultaneously detected by the reading and evaluation device.

5. A system for verifying the correct delivery of delivery units to storage units, in particular for carrying out the method as set forth in one of claims 1 through 4,
wherein the delivery unit (50) has an order-related sign which is disposed on its outside and which identifies the delivery unit (50),
wherein the storage unit (10) which respectively receives at least one delivery unit (50) has a releasable locking device (30),
wherein the storage unit (10) has a first identification sign,
wherein the storage unit (10) has a second identification sign, preferably in the form of a machine-readable code, which is accessible from the exterior after locking of the locking device (30), and
wherein there is provided a mobile reading and evaluation device which accompanies the delivery unit (50) until same is delivered in the storage unit (10), for inputting the signs.

6. A system as set forth in claim 5
wherein the storage unit (10) has a first window (14d) through which, when the delivery unit (50) is put in, the order-related sign is readable from the exterior, and wherein the storage unit (10) has a second window (14c) in which, after locking of the locking device (30), the second identification sign is readable from the exterior.

7. A system as set forth in claim 5
wherein the storage unit (10) has a window with a first field and a second field, wherein in the first field when the delivery unit (50) is put into the storage unit the order-related sign is readable from the exterior and wherein in the second field after locking of the locking device (30) the second identification sign is visible from the exterior in such a way that it half covers over the order-related sign.

8. A system as set forth in one of claims 5 through 7
wherein the first and the second identification sign and/or the order-related sign are machine-readable codes, preferably bar codes.

9. A system as set forth in one of claims 5 through 8
wherein the delivery unit (50) has a closure portion (58) which after locking thereof can be released again only by means of a key which temporarily definedly belongs to the respective delivery unit (50).

10. Use of the method as set forth in one of claims 1 through 4 and the system as set forth in one of claims 5 through 9 for making up batches of and delivering articles in the retail trade.

## Revendications

1. Procédé de vérification de la distribution correcte d'unités de distribution dans des unités de stockage verrouillable qui reçoivent chacune au moins une unité de distribution et qui sont pourvues d'un premier signe d'identification qui est accessible de l'extérieur,
dans lequel un signe lié à la commande est attribué au moins pour la distribution de l'unité de distribution, lequel signe lié à la commande ainsi que le premier signe d'identification de l'unité de stockage à délivrer sont entrés dans un dispositif de lecture et d'évaluation mobile qui accompagne l'unité de distribution jusqu'à ce qu'elle soit délivrée à l'unité de stockage, le signe lié à la commande étant appliqué à l'unité de distribution d'une manière accessible de l'extérieur,
dans lequel, au niveau de l'unité de stockage, avant que l'unité de distribution ne soit entrée dans la susdite, le premier signe d'identification d'abord et ensuite le signe lié à la commande appliqué à l'unité de distribution, ou vice versa, sont entrés par le dispositif de lecture et d'évaluation mobile et stockés dans le dispositif de lecture et d'évaluation mobile,
dans lequel, ensuite, le dispositif de lecture et d'évaluation mobile effectue une comparaison entre la combinaison lue du premier signe d'identification et du signe lié à la commande avec la combinaison, déjà stockée précédemment dans le dispositif de lecture et d'évaluation mobile, du premier signe d'identification et du signe lié à la commande, et affiche le résultat, et
dans lequel, après l'entrée de l'unité de distribution et le verrouillage du dispositif de verrouillage de l'unité de stockage, le signe de l'unité de distribution lié à la commande, qui est accessible de l'extérieur, et un deuxième signe d'identification de l'unité de stockage, qui est accessible de l'extérieur après l'opération de verrouillage au moyen d'une fenêtre dans l'unité de stockage, sont détectés successivement au moyen du dispositif de lecture et d'évaluation mobile au moins dans une courte période de temps prédéterminée.

2. Procédé selon la revendication 1,
dans lequel un ordinateur central qui génère le signe lié à la commande et qui est en communication avec le dispositif de lecture et d'évaluation mobile est prévu.

3. Procédé selon la revendication 1 ou la revendication 2,
dans lequel le deuxième signe d'identification d'une unité de stockage est formé par un signe qui est complémentaire du premier signe d'identification de ladite unité.

4. Procédé selon l'une des revendications 1 à 3,
dans lequel le deuxième signe d'identification et le signe lié à la commande sont détectés en même temps par le dispositif de lecture et d'évaluation.

5. Système pour vérifier la distribution correcte d'unités de distribution à des unités de stockage, en particulier pour exécuter le procédé selon l'une des revendications 1 à 4,
dans lequel l'unité de distribution (50) comporte un signe lié à la commande qui est disposé sur l'extérieur de celle-ci et qui identifie l'unité de distribution (50),
dans lequel l'unité de stockage (10), qui reçoit respectivement au moins une unité de distribution (50), comporte un dispositif de verrouillage libérable (30),
dans lequel l'unité de stockage (10) comporte un premier signe d'identification,
dans lequel l'unité de stockage (10) comporte un deuxième signe d'identification, de préférence sous la forme d'un code lisible par une machine, qui est accessible de l'extérieur après le verrouillage du dispositif de verrouillage (30), et
dans lequel un dispositif de lecture et d'évaluation mobile qui accompagne l'unité de distribution (50) jusqu'à ce que la susdite soit délivrée à l'unité de stockage (10) est prévu pour entrer les signes.

6. Système selon la revendication 5,
dans lequel l'unité de stockage (10) comporte une première fenêtre (14d) à travers laquelle, lorsque l'unité de distribution (50) est entrée, le signe lié à la commande est lisible de l'extérieur, et dans lequel l'unité de stockage (10) comporte une deuxième fenêtre (14c) dans laquelle, après le verrouillage du dispositif de verrouillage (30), le deuxième signe d'identification est lisible de l'extérieur.

7. Système selon la revendication 5,
dans lequel l'unité de stockage (10) comporte une fenêtre comportant un premier champ et un deuxième champ, dans laquelle, dans le premier champ, lorsque l'unité de distribution (50) est entrée dans l'unité de stockage, le signe lié à la commande est lisible de l'extérieur, et dans laquelle, dans le deuxième champ, après le verrouillage du dispositif de verrouillage (30), le deuxième signe d'identification est visible de l'extérieur de telle manière qu'il recouvre à moitié le signe lié à la commande.

8. Système selon l'une des revendications 5 à 7,
dans lequel les premier et deuxième signes d'identification et/ou le signe lié à la commande sont des codes lisibles par une machine, de préférence des codes à barres.

9. Système selon l'une des revendications 5 à 8,
dans lequel l'unité de distribution (50) comporte une partie de fermeture (58) qui, après le verrouillage de celle-ci, ne peut être libérée de nouveau qu'au moyen d'une clé qui appartient temporairement de manière définie à l'unité de distribution (50) respective.

10. Utilisation du procédé selon l'une des revendications 1 à 4 et du système selon l'une des revendications 5 à 9 pour composer des lots d'articles et les distribuer dans la vente au détail.
